# EUROPEAN PATENT APPLICATION

(11) **EP 2 721 980 A1**
(43) Date of publication of application: **23.04.2014**
(21) Application number: 13189469.3
(22) Date of filing: 21.10.2013
(51) Int. Cl.: A47J 43/12

(54) **Device for the preparation of an emulsified beverage**

(30) Priority: 22.10.2012 IT MI20121781
(71) Applicant: Imper S.p.A., 10122 Torino (IT)
(72) Inventor: Pagano, Gaetano, 50123 Firenze FI (IT)
(74) Representative: Spina, Alessandro

(57) **Abstract**

The invention relates to a device (10) for the preparation of an emulsified beverage, typically a milk-based beverage such as cappuccino or hot chocolate, comprising an inlet (15) for an emulsifying fluid, typically steam, and a rotatable member (20), connected or connectable to driving means (12) and rotatable about a longitudinal rotation axis (A), which rotatable member (20) comprises a plurality of channels (22, 23, 24, 25, 26, 27) formed therein and extending longitudinally therethrough. The overall arrangement of the device is such that, in operation, each of said longitudinal channels (22, 23, 24, 25, 26, 27) is periodically arranged in fluid communication with said inlet (15) upon rotation of said rotatable member (20), whereby the channels (22, 23, 24, 25, 26, 27) are fed with the emulsifying fluid alternatively and the fluid is dispensed from the channels (22, 23, 24, 25, 26, 27) toward a base beverage to be emulsified, the base beverage being received in a container (C) and being intended to be mixed by way of said rotatable member (20). Thanks to these features, it is possible to enhance the emulsifying action of the beverage being prepared while reducing the time needed for its preparation.

## Description

### Technical field of the invention

The present invention relates to a device for the preparation of an emulsified beverage, typically a milk -based beverage such as cappuccino, hot chocolate and the like.

### Background of the invention

Many devices for cooking food starting from base preparations to be heated by way of steam are known. These known devices are configured so as to dispense jets of hot steam within a container that receives a base food preparation.

The German patent application DE 10 2010 002446 Al e.g. discloses a method for the preparation of food by way of steam and a related apparatus comprising a steam generating household appliance and a nozzle device movably connected thereto through a flexible hose. In an operation condition of the apparatus, the nozzle device is mounted on a container wherein a base food preparation has been previously poured. The container is closed by a lid of the nozzle device. In order to supply steam to the food to be prepared, the nozzle device is provided with a main duct which receives steam from the household appliance and with a pair of parallel secondary ducts connected to the main duct through a branched portion thereof. The main duct and the secondary ducts are arranged vertically in an operation condition of the nozzle device with the secondary ducts partially dipped in the food to be prepared. The secondary ducts are provided with outlet holes at their longitudinal ends, as well as with outlet holes formed in their mantels and arranged transversally to their respective longitudinal axes, whereby steam exits the secondary ducts both parallel and perpendicularly thereto. The outlet holes formed in the mantles of the secondary ducts face in opposite directions, whereby the steam dispensed therefrom sets the food in rotation within the container allowing it to be mixed while heated.

Among the devices and apparatuses employing steam jets to cook food, there are known devices for the preparation of hot milk-based beverages, such as cappuccino, chocolate and the like. These devices are often provided as accessories to machines for the preparation of coffee or other hot beverages from a base beverage or a preparation such as e.g. an infusion.

A blending member rotatable about its own axis is generally provided to mix the preparation present in the container when steam is dispensed. The combined action of dispensing steam and mixing generates an emulsifying effect on the beverage being prepared, which thus achieves the consistency of a "cream" enhancing its flavor.

The blending member is typically driven by a motor through suitable associated driving means that are typically housed inside the device.

The combined provision of steam dispensing means and the aforesaid driving means of the blending member has some drawbacks that are not fully resolved by the devices known in the art. In particular, some known devices provide for steam supply and dispensing through the rotation axis of the blending member. This generally makes the structure of the device rather complex and often requires to arrange the motor and part of the driving means in a position that is misaligned relative to the rotation axis of the blending member, which negatively affects the overall reliability of the device and may result in vibration phenomena during its operation.

Some other known devices provide for supplying steam transversely to the blending member and then for subsequently deviating it along the axis of the blending member. Also these devices are rather complex, mainly due to the need for effectively supplying steam along a path that is substantially at right angle without causing excessive head losses while maintaining the emulsifying power of steam.

### Summary of the invention

The technical problem tackled and solved by the present invention is therefore to provide a device for the preparation of an emulsified beverage, typically based on milk, which allows to overcome the drawbacks mentioned above with reference to the prior art.

This problem is solved by a device according to claim 1.

Preferred features of the present invention are specified in the dependent claims.

In the device according to the invention, a flow of steam or other emulsifying fluid is fed laterally to the same device and longitudinally dispensed by way of a rotatable member. In particular, steam is dispensed through a plurality of channels formed in the rotatable member along the longitudinal direction. The channels are provided with respective radial inlets, whereby each channel is periodically set in fluid communication with the supply duct as a result of the rotational motion of the rotatable member. This configuration determines a pulsating supply of the emulsifying fluid, which allows to improve the emulsifying effect of a beverage being prepared. This configuration also allows to homogeneously heat the beverage.

The proposed solution enhances the overall quality of an emulsified beverage obtainable with the device and also reduces the time needed for its preparation.

Moreover, these results are obtained with constructive solutions that are mechanically simple and therefore inherently reliable.

According to a preferred embodiment of the invention, the channels formed in the rotatable member have cross sections of a different size. In this way, the emulsifying fluid dispensed in a pulsating mode within the base beverage has different profiles of velocity and/or pressure in each channel. These profiles of velocity and/or pressure enhance the emulsifying action of the dispensed fluid and the homogeneous heating of the beverage being prepared.

According to a particularly preferred embodiment of the invention, the device comprises a removable blending member, preferably substantially spoon-shaped, which, in use, engages an end portion of the rotatable member and is intended to be dipped in the beverage being prepared.

The provision of a device for the preparation of an emulsified beverage comprising the aforesaid removable blending member allows to improve the overall hygienic conditions of the device, because the blending member can be washed separately from the device, even after each preparation.

In a particularly advantageous embodiment, the blending member is a disposable member. In this way, the blending member may be provided to a user together with a beverage, possibly with a disposable container wherein the beverage is prepared. The provision of a disposable blending member further improves the hygienic conditions of the preparation and simplifies the use of the device, thus making it not necessary to clean the device after each preparation or when preparing different types of beverage.

Other advantages and features, as well as the operation mode of the device according to the present invention will become clear to those skilled in the art from the following detailed description of embodiments thereof, given by way of non-limiting examples.

### Brief description of the drawings

Reference will be made to the figures of the accompanying drawings, wherein:
- Figure 1 shows a perspective view of a preferred embodiment of the device according to the present invention;
- Figure 2 shows a longitudinal sectional view of the device of Figure 1 ;
- Figure 2a shows an enlarged detail of the device of Figure 2, marked by the dotted lines of figure 2, wherein part of the steam path supplied to the device has been indicated;
- Figure 3 shows a cross section of the device of the invention taken along line III-III of Figure 2;
- Figure 4 shows a cross section of the device of the invention taken along line IV -IV of Figure 2;
- Figure 5 is a view similar to that of Figure 4, showing an alternative configuration of the channels formed in the rotatable member along the longitudinal direction;
- Figures 6 and 7 respectively show a front view and a side view of a removable blending member of the device according to the invention;
- Figure 8 shows a longitudinal section of the removable blending member taken along the line VIII -VIII of Figure 6.

### Detailed description of preferred embodiments

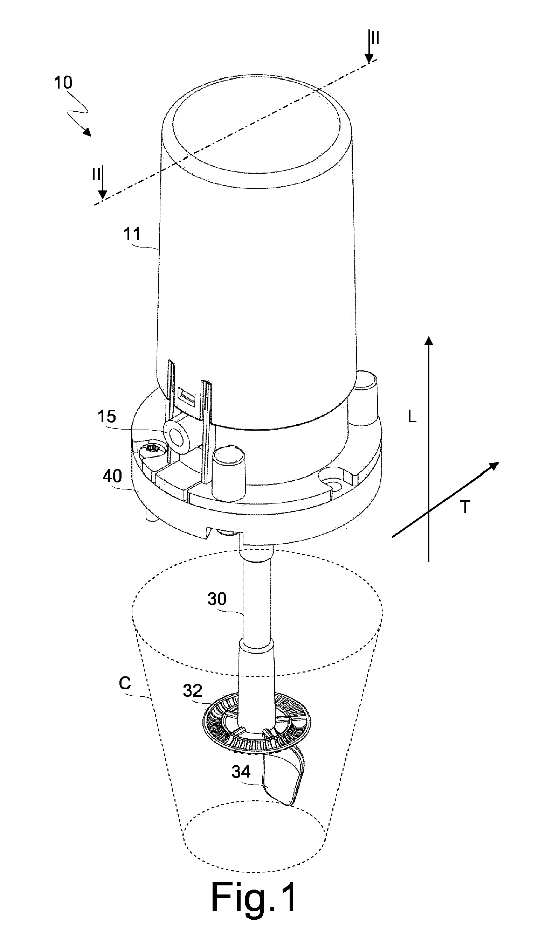

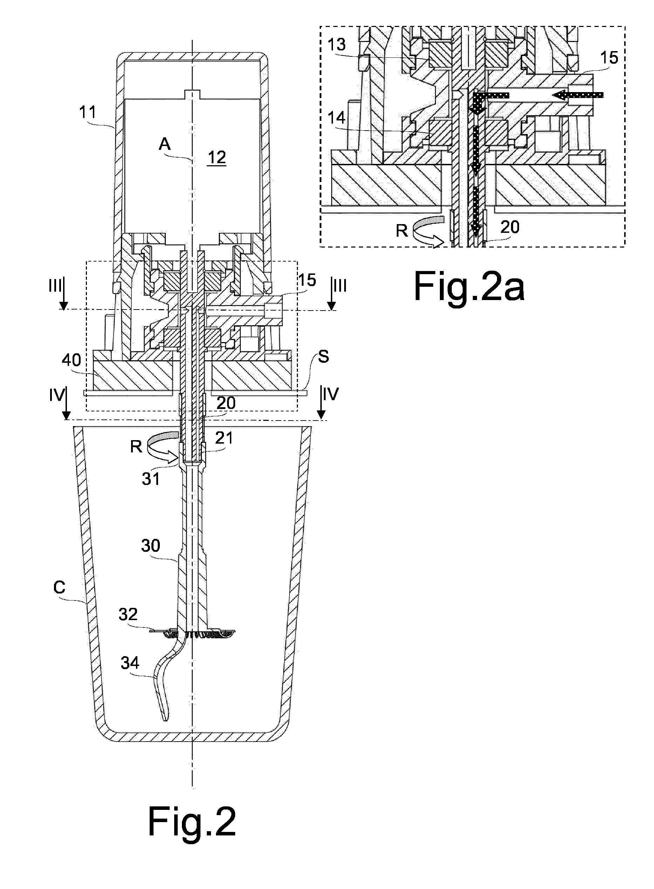

With reference to Figures 1 and 2, a device for the preparation of an emulsified beverage according to the invention is generally indicated by the reference number 10.

The device 10 may be used independently or as an accessory component of a machine for the preparation of coffee or of other beverages starting from a preparation in the form of an infusion either at home or in a shop, such machine being *per se* of a known type.

For simplicity's sake, reference will be made in the following to the preparation of a beverage based on milk, such as cappuccino, hot chocolate and the like, wherein the emulsifying fluid is steam. Hence, the beverage considered in the example may be not only emulsified, but also heated by the steam.

The device 10 comprises a body 11 which extends in a longitudinal direction L and a rotatable member 20 connected thereto rotatably about a rotation axis A parallel to the longitudinal direction L. The rotatable member 20 protrudes from the body 11 in the longitudinal direction L.

In an operating condition the device 10 is arranged substantially vertically with the rotatable member 20 arranged below the body 11. In this way, the rotatable member 20 may be inserted into a container C located below the body 11 and intended to receive a preparation for a desired beverage to be heated and emulsified by dispensing steam.

The rotatable member 20 is connected or connectable to driving means, typically an electric motor.

In the illustrated embodiment, the device 10 comprises an electric motor 12 housed in the body 11 and connected to the rotatable member 20 via a coupling, for example a splined joint or equivalent. Alternatively, the device 10 might be connected to external driving means for driving the rotatable member 20, e.g. arranged in a coffee machine provided with a power takeoff.

The rotatable member 20 is rotatably supported by a pair of bearings 13, 14 of the device 10, which are housed in its body 11.

The device 10 also comprises an inlet for an emulsifying fluid, for example an inlet duct 15 as shown in the drawings.

According to the present invention, the rotatable member 20 comprises a plurality of channels formed therein and extending longitudinally therethrough parallel to the rotation axis A. The channels comprise respective outlets arranged at an end portion 21 of the rotatable member 20 that is intended to face the container C in an operation condition of the device 10. The overall arrangement of the device 10 is such that upon rotation of the rotatable member 20 each one of its channels is periodically arranged in fluid communication with the inlet 15, whereby the channels are fed with the emulsifying fluid, e.g. steam, alternatively and the emulsifying fluid is dispensed therefrom according to a pulsating mode toward a base beverage to be emulsified present in the container C.

Sealing members (not shown) may advantageously be provided at the interface between the inlet duct 15 and the rotatable member 20 in order to prevent undesired leakages of emulsifying fluid, especially outside the device 10 and inside it, e.g. towards the driving means arranged therein.

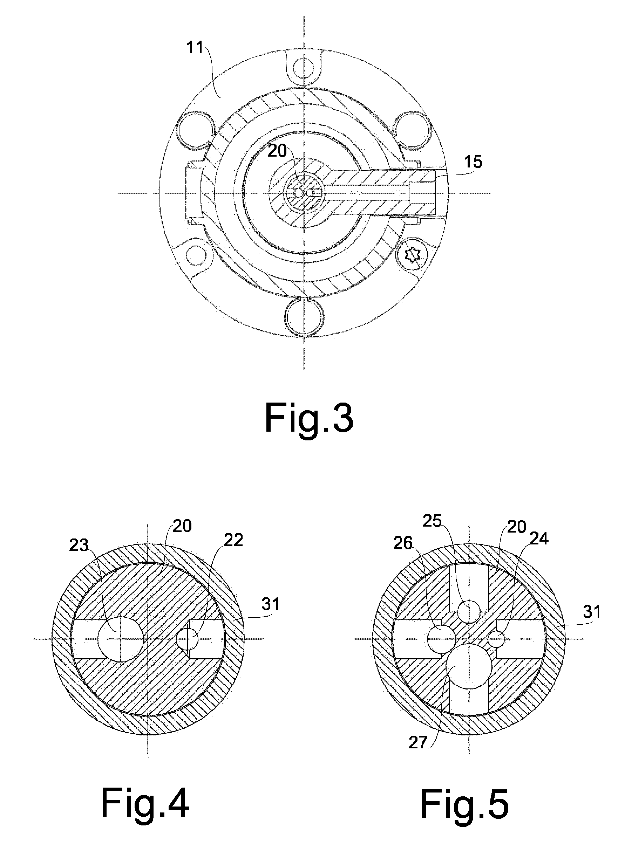

With reference to Figures 2, 2a and 3, in the illustrated embodiment the inlet duct 15 extends laterally relative to the body 11 in a transverse direction T of the device 10, perpendicular to the longitudinal direction L, and the channels comprise respective radial inlets formed on the mantle of the rotatable member 20. The direction of rotation of the rotatable member 20 is schematically shown by an arrow R.

The steam path from the inlet duct 15 to the channels formed in the rotatable member 20 is schematically shown in Figure 2a by way of arrows. As it may be seen, steam passes through the inlet duct 15, enters one of the inlets of the channels formed in the rotatable member 20 and is deviated substantially at a right angle in the longitudinal direction L, thus passing throughout the rotatable member 20 until it is dispensed from its end portion 21 in the container C.

Now referring to Figure 4, in the illustrated embodiment the rotatable member 20 comprises two channels 22, 23. These channels may for example have a substantially cylindrical shape with a substantially circular cross section. This channel configuration is simple and cheap to manufacture and allows to minimize head losses along the path of the emulsifying fluid path throughout the rotatable member 20.

According to a preferred embodiment of the invention, the channels 22, 23 may have cross sections of a different size, which allows to obtain different profiles of velocity and/or pressure of the steam jets dispensed by the rotatable member 20. The provision of different profiles of velocity and/or pressure is synergistic with the pulsating supply mode of the emulsifying fluid that is obtained upon rotation of the rotatable member 20 relative to the inlet duct 15, because they enhance the emulsifying action of the beverage being prepared.

The size ratio of the cross sections of the two channels shown in Figure 4 is for example 9:1. This configuration allows to obtain profiles of pressure and speed that are very different from each other and suitable for the preparation of large amounts of beverages and/or for containers C having streamlined shape such as a glass, i.e. with a small diameter compared to the height dimension.

Figure 5 shows an alternative embodiment wherein the rotatable member 20 comprises four channels 24, 25, 26, 27 having a progressively increasing cross-section size. The dimensional ratios of the cross sections are 2.25:1, 4:1 and 9:1 relative to the cross section of the smallest channel. Compared to the previous embodiment, this configuration of the channels is more suitable for the preparation of reduced amounts of beverage and/or for containers having a squat shape such as a bowl, i.e. with a large diameter compared to the height dimension.

The device 10 according to the invention may also advantageously comprise a blending member 30 coaxially connectable to the rotatable member 20 by way of detachable connecting means 31. The detachable connecting means 31 engage the end portion 21 of the rotatable member 20, preferably by way of an interlocking coupling.

The blending member 30 is detachable from the rotatable member 20 in order to allow cleaning operations, in particular in view of the different types of beverage that may be prepared by the device 10.

Still referring to Figures 1 to 5, the blending member 30 has an elongated shape and is provided with emulsifying means 32 for example in the form of a helical profile extending circumferentially around it.

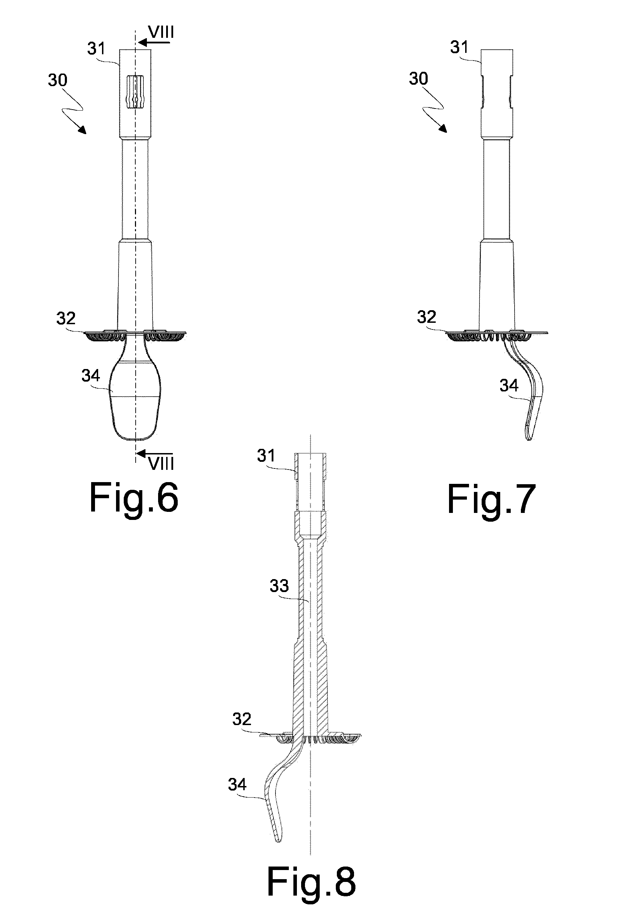

The blending member 30 forms an extension of the rotatable member 20 and to this aim it is provided with a longitudinal channel 33 which crosses it from end to end allowing passage of the emulsifying fluid supplied by the rotatable member 20 as described above. The longitudinal channel 33 is shown in the longitudinal section of Figure 8.

According to an embodiment of the invention, the blending member 30 may advantageously comprise an end portion 34 having substantially the shape of a spoon. Such an end portion 34 contributes to the mixing action carried out by the emulsifying means 32 and also allows to use the blending member 30 as a spoon to taste the finished beverage once detached from the rotatable member 20.

The emulsifying means 32 are preferably arranged in a position that is immediately adjacent to the spoon-shaped end portion 34 and, in use, above the latter, thus allowing to concentrate the emulsifying and mixing actions at the end of the blending member 30, which generally is located proximate to the bottom of the container C, and to obtain an emulsifying effect on the whole volume of the beverage and not only in the most superficial layers.

It will be understood that due to the pulsating dispensing mode of the emulsifying fluid and to the presence of connections among the rotatable components of the device, namely the rotatable member 20 and the blending member 30, and also of the end portion 34 of the latter, the device 10 is subject to vibrations during its operation.

In order to overcome this drawback, the device 10 may advantageously comprise anti-vibration means intended to be arranged in contact with a supporting surface.

In the illustrated embodiment the anti-vibration means are made in the form of an annular member 40 made of an anti-vibration material, typically rubber, coaxially fixed to the body 11 of the device 10 on the side from which the rotatable member 20 protrudes. This configuration particularly allows mounting of the device 10 on a supporting surface S, schematically shown in the longitudinal section of Figure 2, below which the container C for the preparation of the beverage may be arranged.

According to a further aspect of the invention, the blending member 30 may be of a disposable type, which is particularly advantageous in combination with the provision of an spoon-shaped end portion, because it allows to offer the user a finished heated and emulsified beverage together with a disposable spoon for tasting it. Moreover, once disconnected from the member 20 the blending member 30 may be used not only as a spoon, but also as a straw by exploiting the longitudinal channel 33 formed therein.

The blending member 30 described above may be subject to separate and independent protection with respect to the device 10 for the preparation of an emulsified beverage, as described above in association with such a blending member 30.

The present invention has so far been described with reference to preferred embodiments thereof. It is to be understood that there may exist other embodiments based on the same inventive concept, as defined by the scope of protection of the claims set forth below.

## Claims

1. A device (10) for the preparation of an emulsified beverage, typically a milk-based beverage such as cappuccino or hot chocolate, comprising:
- an inlet (15) for an emulsifying fluid, typically steam, and
- a rotatable member (20), connected or connectable to driving means (12) and rotatable about a longitudinal rotation axis (A), which rotatable member (20) comprises a plurality of channels (22, 23, 24, 25, 26, 27) formed therein and extending longitudinally therethrough,
the overall arrangement being such that, in operation, each of said longitudinal channels (22, 23, 24, 25, 26, 27) is periodically arranged in fluid communication with said inlet (15) upon rotation of said rotatable member (20), whereby the channels (22, 23, 24, 25, 26, 27) are fed with the emulsifying fluid alternatively and the fluid is dispensed from the channels (22, 23, 24, 25, 26, 27) toward a base beverage to be emulsified, the base beverage being received in a container (C) and being intended to be mixed by way of said rotatable member (20).

2. A device (10) according to claim 1, wherein cross sections of said longitudinal channels (22, 23, 24, 25, 26, 27) have a respective different size.

3. A device (10) according to claim 1 or 2, wherein each channel (22, 23, 24, 25, 26, 27) has a substantially cylindrical shape, with a substantially circular cross section.

4. A device (10) according to any one of claims 1 to 3, wherein said rotatable member (20) comprises two longitudinal channels (22, 23), and wherein the size ratio between their respective cross sections is preferably equal to 9:1.

5. A device (10) according to any one of claims 1 to 3, wherein said rotatable member (20) comprises four longitudinal channels (24, 25, 26, 27), and wherein the ratios between the cross sections of the longitudinal channels having a larger cross section (25, 26, 27) with respect to the one having the smallest cross section (24) are preferably equal to 2.25:1, 4:1 and 9:1, respectively.

6. A device (10) according to any one of claims 1 to 5, wherein said inlet (15) is an inlet duct (15) that extends in a transverse direction (T) of the device (10), which is substantially perpendicular to the longitudinal flow direction within the longitudinal channels (22, 23, 24, 25, 26, 27) of said rotatable member (20) and wherein the longitudinal channels (22, 23, 24, 25, 26, 27) of the rotatable member (20) comprise respective radial inlets formed in the mantle of the rotatable member (20).

7. A device (10) according to any one of claims 1 to 6, further comprising a blending member (30), said blending member (30) being connectable by way of a detachable connection (31) to said rotatable member (20) in correspondence of an end portion (21) thereof.

8. A device (10) according to any one of claims 1 to 7, comprising said driving means (12) of the rotatable member (20) and wherein said driving means (12) are housed in a body (11) of the device (10).

9. A device (10) according to any one of claims 1 to 8, comprising anti-vibration means (40), preferably intended to be arranged in contact with a surface (S) for supporting the device (10).

10. A removable blending member (30) for use with a device (10) for preparing an emulsified beverage according to any one of claims 1 to 9, typically a milk-based beverage such as cappuccino or hot chocolate, said blending member (30) being adapted to be immersed in a beverage to be emulsified and having a substantially elongated shape, wherein the blending member (30) comprises means (31) for detachable connection to a rotatable member (20) of said device (10), said detachable connection means (31) being arranged at one end of the blending member (30), and wherein the blending member (30) further comprises a longitudinal channel (33) for dispensing an emulsifying fluid, said channel (33) being in fluid communication with the rotatable member (20) during use.

11. A blending member (30) according to claim 10, comprising emulsifying means (32) that are preferably in the form of a helical profile, said helical profile extending circumferentially around the blending member (30).

12. A blending member (30) according to claim 10 or 11, comprising an end portion (34) having substantially the shape of a spoon, said end portion (34) being arranged at the end of the blending member (30) opposite to the end at which the connection means (31) are arranged.

13. A blending member (30) according to claims 11 and 12, wherein said emulsifying means (32) are arranged immediately adjacent to said spoon-shaped end portion (34) and above it in an operation condition of the blending member.

14. A blending member (30) according to any one of claims 10 to 13, wherein said detachable connection means (31) are engagement means of an end portion (21) of the rotatable member (20) of the device (10), preferably in the form of an interlocking coupling.

15. A blending member (30) according to any one of claims 10 to 14, said blending member (30) being of the disposable type.

16. A device (10) for the preparation of an emulsified beverage according to any one of claims 1 to 9, said device (10) comprising a blending member (30) according to any one of claims 10 to 15.

17. A method for the preparation of an emulsified beverage, typically a milk-based beverage such as cappuccino or hot chocolate, said method comprising the steps of dispensing an emulsifying fluid, preferably steam, within a base beverage for a beverage to be emulsified, **characterized in that** dispensing of said emulsifying fluid occurs according to a pulsating mode.

18. A method according to claim 17, wherein dispensing according to said pulsating mode is obtained by supplying the emulsifying fluid from an inlet to a rotatable member provided with a plurality of channels formed therein and extending longitudinally therethrough, and wherein upon rotation of the rotatable member the channels are periodically arranged in fluid communication with said inlet, whereby the channels are alternatively fed with the emulsifying fluid.

19. A method according to claim 18, wherein cross sections of said channels have a respective different size, whereby flows of the emulsifying fluid dispensed by the different channels have different profiles of velocity and/or pressure.
